## Europäisches Patentamt
## European Patent Office
## Office européen des brevets

(11) Veröffentlichungsnummer : **0 100 005**
**B1**

(12) **EUROPÄISCHE PATENTSCHRIFT**

(45) Veröffentlichungstag der Patentschrift :
22.01.86

(51) Int. Cl.⁴ : **D 21 H  5/12, H 01 M  4/60**

(21) Anmeldenummer : **83106641.0**

(22) Anmeldetag : **07.07.83**

(54) **Mischvliese.**

(30) Priorität : **20.07.82 DE 3227065**

(43) Veröffentlichungstag der Anmeldung :
**08.02.84 Patentblatt 84/06**

(45) Bekanntmachung des Hinweises auf die Patenterteilung : **22.01.86 Patentblatt 86/04**

(84) Benannte Vertragsstaaten :
**CH DE FR GB IT LI NL**

(56) Entgegenhaltungen :
**EP-A- 0 045 908**
**EP-A- 0 050 441**
**EP-A- 0 062 213**
**DE-A- 2 030 296**
**US-A- 3 928 516**
**LA RECHERCHE, Nr. 126, Oktober 1981, Seiten 1132-1134, Paris, FR. F. Bénière: "Des nouveaux matériaux pour révolutionner la pile Leclanché et les accumulateurs Planté"**
**JOURNAL OF THE ELECTROCHEMICAL SOCIETY, Band 128, Nr. 8, August 1981, Seiten 1651-1654, Manchester, New Hampshire, USA P.J. NIGREY et al.: "Lightweight rechargeable storage batteries using polyacetylene, (CH) as the cathode-active material"**

(73) Patentinhaber : **BAYER AG**
**Konzernverwaltung RP Patentabteilung**
**D-5090 Leverkusen 1 Bayerwerk (DE)**

(72) Erfinder : **Hocker, Jürgen, Dr.**
**Eichenweg 6**
**D-5060 Bergisch-Gladbach 2 (DE)**

Jouve, 18, rue St-Denis, 75001 Paris, France

## Beschreibung

Gegenstand der Erfindung sind Mischvliese, die aus mindestens zwei Faserarten bestehen und von denen mindestens eine Faserart aus dotiertem oder undotiertem Polyacetylen besteht.

Es ist bekannt, zur Herstellung von Vliesen mit besonderen Eigenschaften Mischungen verschiedener Faserarten einzusetzen. Auch die Herstellung von Kohlenstoffaservliesen bzw. Kohlenstoffasern enthaltenden Vliesen ist bekannt. Dabei verwendet man vorzugsweise Fasern mit Längen zwischen 1 und 40 mm und arbeitet nach nassen oder trockenen Verfahren.

Es wurde nun überraschenderweise gefunden, daß man in sehr vorteilhafter Weise Vliese mit erhöhter elektrischer Leitfähigkeit herstellen kann, wenn man einem bekannten, vliesbildenden Fasermaterial zwischen 1 und 99 % krebschen- oder faserförmiges Polyacetylen zufügt. Die verwendeten Polyacetylen-Krebschen oder -Fasern sind bekannt (Europäische Patentanmeldung 0 045 908) und haben einen Durchmesser bzw. eine Länge von vorzugsweise 0,01-1 cm. Bedingt durch die Krebschen- bzw. Faserform wird eine zusätzliche Verfestigung des Vlieses erreicht, so daß auch sonst nicht vliesbildende Materialien mitverwendet werden können. Die erhöhte mechanische Festigkeit der polyacetylenhaltigen Vliese wirkt sich bei Anwendungen sehr vorteilhaft aus.

Unter Mischvliesen werden im folgenden sowohl Einzelvliese beliebigen Zuschnittes als auch kontinuierliche Vliesware gleichbleibender Breite, die auf Spulen aufgewickelt werden kann und die zwischen 1 und 99 % Polyacetylen enthalten, verstanden.

Zur Herstellung der Mischvliese können neben Polyacetylen anorganische oder organische Fasermaterialien eingesetzt werden. Als anorganische Fasermaterialien kommen z. B. Fasern aus Glas, Asbest oder Kohlenstoff in Frage. Als organische Fasern kommen z. B. die Naturfasern wie Wollmasse, Manilahanf, Baumwollinter, Papiermaische, Edgeworthia papyrifera und dgl. in Frage.

Als organische synthetische Fasern können im Rahmen der Erfindung außer denjenigen, die aus relativ hydrophilen, hochmolekularen Polymeren, wie Rayon und Polyvinylalkoholfasern aufgebaut sind, Fasern aus hydrophoben, organischen synthetischen, hochmolekularen Polymeren wie Polyester, Polyamid, Polypropylen, Polyacrylnitril, Polyvinylchlorid, Polyvinylidenchlorid, Polyethylene, Polypropylen, Polybutadien, Polyisobutylen, Polystyrol, Polycarbonate, Polyurethane, Polyether, Polyparaphenylensulfid sowie Homo- und Copolymere von Vinylverbindungen verwendet werden.

Unter « Polyvinylalkoholfasern » werden diejenigen verstanden, die aus Polyvinylalkohol durch vollständige oder teilweise Verseifung von Polyvinylacetat aufgebaut sind, wobei die Fasern anschließend wärmebehandelt oder wärmebehandelt und formalisiert werden. « Rayonfasern » werden aus Cellulosebrei nach dem Viskoseverfahren erhalten. « Polyesterfasern » werden aus einem Säurebestandteil, wie Terephthalsäure, Isophthalsäure, Orthophthalsäure, Oxybenzoesäure, Adipinsäure und Sebacinsäure und einem Glykolbestandteil, wie Ethylenglykol, Propylenglykol, Neopentylglykol, Diethylenglykol und dgl., durch Polykondensation oder Copolykondensation erhalten. « Polyamidfasern » sind aus Polyamiden aufgebaut, wie Nylon-6,6, Nylon 6, Nylon-12 und dgl., aromatischen Polyamidfasern, die aus Paraxylilendiamin und Adipinsäure, Terephthalsäure oder Isophthalsäure erhalten wurden oder Copolyamidfasern, die durch Copolykondensation der vorstehend aufgeführten Bestandteile erhalten wurden. « Polypropylenfasern » sind polypropylenhaltige Fasern, die aus Polypropylen oder Copolymeren aufgebaut sind, die durch Copolymerisation von Propylen mit Ethylen, Vinylchlorid, Vinylidenchlorid und dgl., erhalten wurden.

Die Schnittfasern dieser organischen synthetischen Fasern können die gewünschte Faserlänge und Denierzahl aufweisen. Für die Zwecke der Erfindung wird eine Faserlänge bis zu 40 mm, vorzugsweise 0,1 bis 40 mm, insbesondere 0,1 bis 25 mm bevorzugt.

Durch Zusatz von Polyacetylen wird es möglich, nicht-gewebte Bahnen von guter Ausbildung unter Anwendung gewöhnlicher Papiermaschinen selbst mit geschnittenen Fasern einer Länge von 15 bis 25 mm herzustellen.

Das erfindungsgemäße Mischvlies kann neben Polyacetylen eine oder mehrere Fasersorten enthalten.

Es ist möglich, gleichzeitig 1 bis 30 % Binderfasern zur Haftung der gebildeten, nicht-gewebten Bahnen zu verwenden. Als Binderfasern können in heißem Wasser lösliche Polyvinylalkoholfasern, niedrig-schmelzende Polyesterfasern, beispielsweise Polyethylenterephthalat/Isophthalat-Fasern und dgl., verwendet werden.

Die Fasergemische können beispielsweise in einem geeigneten Suspensionsmittel in an sich bekannter Weise dispergiert werden. Die Suspension kann mit bekannten Vorrichtungen, wie Zerteilern, Pulpern, Holländern, Refinern und dgl., hergestellt werden. Die Faserkonzentration in der Suspension beträgt vorzugsweise 0,5 bis 6 %, insbesondere 0,5 bis 3 %.

Die Suspension wird zur Lagerung in einen Behälter, Kasten und dgl. geführt, mittels einer Meßpumpe oder eines Mischkastens gemessen, auf eine Faserkonzentration von 0,01 bis 0,5 % verdünnt und dann von hier z. B. zu einer Papiermaschine von bekannter Art transportiert.

Das heißt, die Fasersuspension wird auf das Wasserablauf-Drahtnetz geführt. Sofern die Maschine das Lösungsmittel durch das Drahtnetz unter Bildung von nicht-gewebten Bahnen der Fasern abzieht, ist die Art der Maschine in keiner Weise kritisch. Beispielsweise können Fourdrinier-Maschinen, Zylindermaschinen oder geneigte Drahtpapiermaschinen verwendet werden.

Wegen der Oxidationsempfindlichkeit des Polyacetylens ist es jedoch vorteilhaft, unter einem Schutzgas wie Stickstoff, Kohlendioxid oder Argon zu arbeiten.

Es ist möglich, gelatineartige Substanzen, wie Polyethylenoxid, Carboxymethylcellulose, Natriumalginat, Kaliummetaphosphat, Natriumpolyacrylat, Karaya-Gummi und dgl., in an sich bekannter Weise in einer Konzentration im Bereich von $1 \times 10^{-3}$ bis $1 \times 10^{-5}$ %, bezogen auf das Gewicht der Suspension, zuzusetzen. Ferner können die Suspensionen Farbstoffe, Pigmente, Oxidationsverzögerer, Bindemittel wie z. B. niedrigschmelzende Fibrillen oder Fasern, Füllstoffe, Dispergierhilfsmittel oder Dotierungsmittel enthalten.

Die auf der Papiermaschine gebildete nicht-gewebte Bahn wird in einem Heißgastrockner oder einem Trommeltrockner getrocknet und das nicht-gewebte Bahnprodukt erhalten.

Das Produkt kann mit einer Binderlösung zu Verstärkungszwecken in an sich bekannter Weise behandelt werden, so daß eine Haftung zwischen den Fasern ausgebildet wird.

Gemäß der Erfindung können nicht-gewebte Bahnen mit guter Ausbildung, wobei die Fasern einheitlich dispergiert sind und die praktisch frei von Faserklumpen sind, erhalten werden. Die nicht-gewebten Bahnen zeigen auch ausgezeichnete mechanische Eigenschaften, wie Zugfestigkeit, Reißfestigkeit, Prallfestigkeit, Haltungsbeständigkeit und dgl. Ein besonderer Vorteil liegt in der erhöhten elektrischen Leitfähigkeit der erfindungsgemäßen Mischvliese.

Weitere Möglichkeiten zur Herstellung der Mischvliese bestehen im Absaugen, Abpressen oder Abzentrifugieren der Mischsuspensionen. Dabei arbeitet man bevorzugt in Abwesenheit von Luftsauerstoff unter Schutzgas.

Beispiele für geeignete Dispersionsmittel sind Kohlenwasserstoffe, wie beispielsweise Butan, Hexan, Cyclohexan, Penten, Benzol und Toluol ; halogenierte Kohlenwasserstoffe, wie z. B. Methylenchlorid, Chloroform, Methylchlorid, Propylchlorid, Trichlorethylen, Trichlorethan, Fluortrichlormethan und 1,1,2-Trichlor-1,2,2-trifluorethan ; Alkohole wie z. B. Methanol, Ethanol, Propanol, und Butanol ; Ketone wie z. B. Aceton, Methylethylketon und Hexafluoraceton ; Ester wie z. B. Methylacetat, Ethylacetat und γ-Butyrolacton, Ether, wie z. B. Ethylether, Tetrahydrofuran und Dioxan ; Nitrile, wie z. B. Acetonitril und Propionitril ; und Trifluoressigsäure, Kohlenstofftetrachlorid, Schwefelkohlenstoff, Nitromethan, Wasser und Schwefeldioxid ; und eine Kombination derselben. Je nach der Natur des besonderen polymeren Materials sollte ein geeignetes, zugehöriges Dispersionsmittel ausgewählt werden.

Die erfindungsgemäßen Mischvliese können zur Erzielung einer höheren Leitfähigkeit « dotiert » werden. Geeignete Dotierungsmittel sind z. B. Jod, Brom, $AsF_5$, $SbF_5$, $AsCl_5$, $FeCl_3$, $SnCl_4$, $TiCl_4$, $NOPF_6$, $NOAsF_6$, $NOBF_4$, $NO_2AsF_6$, Protonsäuren wie z. B. $HClO_4$, $H_2SO_4$, HCl, $CF_3SO_3H$ u. a., Alkalimetalle, $NaNH_2$, Amine.

Dabei kann das Mischvlies den Dämpfen des Dotierungsmittels ausgesetzt oder in eine Lösung des Dotierungsmittels in einem inerten Lösungsmittel getaucht werden. In einer besonderen Ausführungsform kann das Dotierungsmittel bei der Vliesherstellung zugesetzt werden.

Für manche Anwendungszwecke ist es vorteilhaft, das undotierte oder dotierte Vlies luftdicht zu verpacken. Dies kann z. B. durch Einschweißen in Folien mit geringer Sauerstoffdurchlässigkeit geschehen. Eine andere Möglichkeit besteht darin, das Mischvlies mit einer Lösung eines Polymeren mit geringer Sauerstoffdurchlässigkeit zu imprägnieren und so eine Schutzschicht auf den Einzelfasern zu erzeugen.

Die erfindungsgemäßen Mischvliese können als antistatische, elektrisch leitende oder halbleitende Bauelemente z. B. in Flächenheizleitern oder zur Abschirmung elektromagnetischer Felder Verwendung finden. Weiterhin können sie als selektive Absorber zur photothermischen Umwandlung von Sonnenlicht eingesetzt werden.

Besonders bevorzugt ist jedoch die Verwendung polyacetylenhaltiger Mischvliese als Elektrodenmaterial in Batterien anstelle der reinen Polyacetylenfilme, die gemäß Journal of the Electrochemical Society, Vol. 128 (1981), Seite 1651, für diesen Zweck bisher verwendet wurden.

Beispiel 1

Zu 1 l einer 1 gew.-%igen Suspension aus ungebleichtem Zellstoff in Wasser wird unter starkem Rühren 1 l Ethanol, in dem 1 g krebschenförmiges Polyacetylen suspendiert ist, zugesetzt. Die Hälfte des Gemisches wird über eine Porzellannutsche von 15 cm ⌀ abgesaugt. Das feuchte Vlies wird zwischen 2 Metallplatten mit 5 mm Distanzstücken und einer Belastung von 5 kg im Hochvakuum 24 h bei Raumtemperatur über Phosphorpentaoxid getrocknet. Man erhält ein Vlies von 13 cm ⌀ und 3,5 mm Dicke mit guter Zugfestigkeit und einer elektrischen Leitfähigkeit von $3 \times 10^{-7} \, \Omega^{-1} \, cm^{-1}$.

Beispiel 2

Analog Beispiel 1 wird ein Vlies mit Baumwoll-Linters und Polyacetylen hergestellt. Man erhält ein Vlies mit einem Durchmesser von 13,5 cm, einer Dicke von 3 mm und guter Zugfestigkeit. Die spez. Leitfähigkeit beträgt $1,6 \times 10^{-7} \, \Omega^{-1} \, cm^{-1}$.

Beispiel 3

Analog Beispiel 1 wird ein Vlies mit Dralonschnittfasern dtex 3,3/6 mm halbmatt und Polyacetylen hergestellt. Das dunkle Vlies ist sehr locker und hat keine Festigkeit. Pressen bei 200 Kp/cm² (19,6 MPa) gibt dem Vlies jedoch eine sehr hohe Zugfestigkeit und metallischen Glanz. Das Vlies hat einen Durchmesser von 15 cm und ist 1 mm dick.

## Beispiel 4

Analog Beispiel 3 wird ein Vlies mit Perlonschnittfasern PAG halbmatt 3,3 dtex/6 mm und Polyacetylen hergestellt. Das Vlies hat nach dem Pressen einen Durchmesser von 15 cm, eine Dicke von 1 mm, eine gute Zugfestigkeit und metallischen Glanz.

## Beispiel 5

Zu 1 l Ethanol, in dem 1 g Polyacetylen suspendiert ist, werden 2 g Jod zugesetzt und gerührt, bis das Jod gelöst ist. Diese Suspension wird in 1 l einer 1 gew.-%igen Suspension aus Baumwoll-Linters in Wasser eingerührt. Die Hälfte wird über eine Porzellannutsche mit 15 cm Ø abgesaugt. Das feuchte Vlies wird zwischen 2 Metallplatten mit 5 mm Distanzstücken und einem 5 kg Gewicht im Hochvakuum 24 h bei Raumtemperatur über Phosphorpentaoxid getrocknet. Man erhält ein Vlies von 13 cm Durchmesser und 3,2 mm Dicke. Die spezifische Leitfä-higkeit beträgt $\kappa_{RT} = 2,2 \cdot 10^{-1} \ \Omega^{-1} \ cm^{-1}$.

## Beispiel 6

1 g eines Vlieses bestehend aus ungebleichtem Zellstoff und Polyacetylen im Verhältnis 1 : 2 wird bei Raumtemperatur unter Stickstoff 48 Stunden Joddämpfen ausgesetzt. Das Gewicht des Vlieses steigt dabei auf 1,84 g an. Das joddotierte Vlies zeigt eine Gewichtszunahme von 84 % und eine spezifische Leitfähigkeit von $\kappa_{RT} = 1,2 \times 10^{-1} \ \Omega^{-1} \ cm^{-1}$.

## Beispiel 7

Analog Beispiel 6 wird ein Baumwoll-Linters/Polyacetylen-Vlies (1 : 1) dotiert. Die Gewichtszunahme beträgt 161 % und die spezifische Leitfähigkeit beträgt $\kappa_{RT} = 1,1 \times 10^{-1} \ \Omega^{-1} \ cm^{-1}$.

## Beispiel 8

Analog Beispiel 6 wird ein Baumwoll-Linters/Polyacetylen-Vlies (1 : 1), das mit 200 Kp/cm² (19,6 MPa) gepreßt wurde, dotiert. Die Gewichtszunahme beträgt 97,5 % und die spezifi-sche Leitfähigkeit $\pi_{RT} = 1,3 \times 10^{-1} \ \Omega^{-1} \ cm^{-1}$.

## Beispiel 9

1 g eines Vlieses aus ungebleichtem Zellstoff und Polyacetylen im Verhältnis 1 : 1 wird unter Stickstoff 48 Stunden in eine Lösung aus 2,5 g Eisen (III)-chlorid (wasserfrei) und 50 ml absolutem Acetonitril gelegt. Danach wird das dotierte Vlies 2 mal mit 50 ml absolutem Acetonitril gewaschen und 3 Stunden bei Raumtemperatur im Hochvakuum getrocknet. Das Gewicht des Vlieses steigt auf 1,405 g an. Das dotierte Vlies zeigt eine spezifische Leitfähigkeit von $\kappa_{RT} = 2,4 \times 10^{-2} \ \Omega^{-1} \ cm^{-1}$.

## Beispiel 10

Analog Beispiel 9 wird ein Baumwoll-Linters-Polyacetylen-Vlies (20 : 80) dotiert. Die Gewichtszunahme beträgt 62 % und die spezifische Leitfä-higkeit $\kappa_{RT} = 1,4 \times 10^{-1} \ \Omega^{-1} \ cm^{-1}$.

## Beispiel 11

Analog Beispiel 9 wird ein bei 200 Kp/cm² (19,6 MPa) gepreßtes Baumwoll-Linters-Polyacetylen-Vlies (70 : 30) dotiert. Die Gewichtszunahme beträgt 45 %, die spezifische Leitfähigkeit $\kappa_{RT} = 9,5 \times 10^{-2} \ \Omega^{-1} \ cm^{-1}$.

## Beispiel 12

Ein Vlies bestehend aus Polyacetylen und Baumwoll-Linters im Verhältnis 1 : 1 wird für Batterieelektroden in Stücke geschnitten. Die Maße der Anode sind 19,6 × 36 × 3,4 mm, das Gewicht beträgt 588 mg, die Maße der Kathode sind 21 × 36 × 3 mm und das Gewicht beträgt 575 mg.

Die beiden Vliesstücke werden mit Golddraht auf je einem Platinblech befestigt, in 200 ml einer 0,1 molaren Lösung aus Tetrabutylammoniumperchlorat in absolutem Propylencarbonat getaucht und aufgeladen.

Die Ladezeit beträgt 32 Min., die Ladespannung 4 V und der Ladestrom 4,3 mA.

Beim Entladen, über eine 4 V/50 mA Leuchtdiode mit 100 Ω Vorwiderstand, fließt ein Strom von 2,4 mA bei 1,8 V Spannung. Die Quellenspannung beträgt 2,6 V. Nach 34 Min. erlischt die Diode, der Strom beträgt jetzt 0,6 mA bei 1,55 V Spannung.

Alle Arbeiten wurden in einer Glove-Box mit $N_2$-Atmosphäre durchgeführt.

## Patentansprüche

1. Vliese mit erhöhter elektrischer Leitfähigkeit aus bekannten vliesbildenden Fasermaterialien und 1-99 % krebschen- oder faserförmigem Polya-cetylen.

2. Vliese mit erhöhter elektrischer Leitfähigkeit gemäß Anspruch 1, dadurch gekennzeichnet, daß das darin enthaltene Polyacetylen dotiert ist.

3. Verwendung der Mischvliese nach Anspruch 1 als Elektrodenmaterial in Speicherbatterien.

## Claims

1. Fleeces with increased electrical conductivity consisting of known fleece-forming fibre materials and 1-99 % of burr- or fibre-shaped polyacetylene.

2. Fleeces with increased electrical conductivity according to Claim 1, characterised in that the polyacetylene contained therein is doped.

3. Use of the mixed fleeces according to Claim 1 as electrode material in storage batteries.

**Revendications**

1. Nappe de fibres de conductivité électrique élevée en matériaux fibreux connus formant des nappes et 1-99 % de polyacétylène sous forme de petites boucles ou de fibres.

2. Nappe de fibres de conductivité électrique élevée selon la revendication 1, caractérisée en ce que le polyacétylène qu'elle contient est dopé.

3. Utilisation des nappes de fibres mixtes selon la revendication 1, comme matériau d'électrodes dans les accumulateurs.